# FASCICULE DE BREVET EUROPEEN

(11) **EP 0 484 850 B1**
(45) Date de publication et mention de la délivrance du brevet: **13.03.1996**
(21) Numéro de dépôt: 91118762.3
(22) Date de dépôt: 04.11.1991
(51) Int. Cl.: C03B 23/047, C03B 23/037, C03B 37/012, G02B 6/38

(54) **Procédé de fabrication de multiferrules comportant une serie de canaux a axes parallèles et multiferrule issue de ce procédé**
Herstellungsverfahren von Multisteckerstiften mit einer Reihe von Kanälen mit parallelen Achsen und so hergestellter Multisteckerstift
Process of fabrication of multiferrules with a series of channels with parallel axes and multiferrule thus produced

(30) Priorité: 08.11.1990 FR 9013857; 30.08.1991 FR 9110786
(43) Date de publication de la demande: 13.05.1992
(73) Titulaire: ALCATEL FIBRES OPTIQUES, F-95871 Bezons Cedex (FR)
(72) Inventeur: Brehm, Claude, F-92120 Montrouge (FR); Dupont, Philippe, F-77000 Penil (FR); Tardy, André, F-91520 Egly (FR)
(74) Mandataire: Weinmiller, Jürgen

(56) Documents cités:
- EP-A- 0 089 498
- EP-A- 0 249 237
- EP-A- 0 259 877
- EP-A- 0 283 301
- GB-A- 2 108 483
- US-A- 3 455 666
- US-A- 3 654 680
- US-A- 3 740 561
- US-A- 4 071 343
- US-A- 4 549 891
- PATENT ABSTRACTS OF JAPAN vol. 10, no. 225 (P-484)(2281) 6 Août 1986 & JP-A-
- 61 061 111 ( SUMITOMO ) 28 Mars 1986
- REVIEW OF THE ELECTRICAL COMMUNICATION LABORATORIES. vol. 35, no. 5, Septembre 1987, TOKYO JP pages 529 - 533; E. SUGITA ET AL.: 'High performance push-pull coupling single fiber connectors and plug-in fiber-optic connectors'

## Description

La présente invention concerne un procédé de fabrication de multiferrules : ces multiferrules sont destinées au raccordement d'un assemblage de fibres optiques à un autre ou à un module de guides d'ondes optiques.

Le raccordement de fibres optiques, pour télécommunications par exemple, nécessite un guidage des extrémités permettant d'atteindre une grande précision d'alignement. Les nouvelles générations de câbles comportent des assemblages de fibres optiques disposées, par exemple, en rubans de 5 à 10 fibres (appelés rubans multifibres). Pour connecter entre eux deux de ces assemblages sans les souder l'un à l'autre, on peut utiliser une pièce de guidage comportant une série de canaux calibrés à axes parallèles, appelée multiferrule, dans laquelle sont engagés les deux assemblages à relier.

Dans l'art antérieur, ces multiferrules sont habituellement réalisées de manière individuelle en céramique usinée. Elles se présentent sous forme de plaquettes de céramique dans lesquelles ont été usinés, pour chaque fibre à connecter, des canaux, cylindriques par exemple, à axes parallèles et de diamètre sensiblement égal à celui des fibres. La vérification de la valeur de ces diamètres est effectuée en passant dans chaque canal un fil du diamètre exigé. Compte tenu de la précision demandée (typiquement, le diamètre d'une fibre optique est de 125 microns et celui des canaux de 127 microns) et du nombre de canaux à usiner pour obtenir une multiferrule, l'usinage des céramiques est un procédé complexe donc très onéreux.

On connaît par ailleurs par les brevets US-A-3 654 680 et US-A-3 740 561 des procédés permettant de fabriquer des pièces en un matériau vitreux comportant une pluralité de canaux à axes parallèles. Selon ces procédés, on part d'une pièce initiale constituée d'un assemblage de pièces tubulaires comportant chacune un alésage. On étire ensuite cette pièce initiale en la chauffant, après avoir solidarisées entre elles les pièces tubulaires, pour obtenir une pièce finale de dimensions requises.

Toutefois, dans un tel assemblage de pièces tubulaires, les précisions relatives au positionnement des canaux les uns par rapport aux autres sont médiocres, du fait de l'accumulation des erreurs de positionnement de chacune des pièces tubulaires l'une par rapport à l'autre.

On connaît en outre le document GB-A-2 108 483 qui décrit un procédé de fabrication de composants micro-optiques (vés d'alignement de fibres optiques, lentilles) par fibrage de préformes adaptées.

La présente invention a donc pour but de réaliser un procédé de fabrication moins complexe et moins coûteux que ceux de l'art antérieur, pour fabriquer des multiferrules dont les dimensions sont définies avec de grandes précisions.

La présente invention propose à cet effet un procédé de fabrication de multiferrules en un matériau vitreux comportant une pluralité de canaux cylindriques à axes parallèles, comprenant les opérations suivantes :
- on réalise dans un matériau vitreux une ébauche de section bien définie, comprenant des alésages cylindriques à axes parallèles ayant un diamètre intérieur Di, les dimensions de la section extérieure de ladite ébauche et le diamètre Di étant définis avec des précisions relatives au moins égales aux précisions relatives demandées respectivement pour les dimensions de la section extérieure de la multiférrule à réaliser et le diamètre intérieur di desdits canaux de ladite multiferrule, ladite ébauche étant destinée à être chauffée et simultanément étirée jusqu'à obtention des dimensions extérieures requises,
- on dispose ladite ébauche verticalement dans une installation du même type qu'une installation de fibrage pour fibres optiques,
- on exerce un échauffement et une traction sur la pièce en formation à la partie inférieure de ladite ébauche, pour obtenir une pièce intermédiaire ayant les dimensions extérieures requises,
- on réalise une multiferrule de longueur choisie en sectionnant une longueur donnée de la pièce intermédiaire obtenue comme indiqué ci-dessus.

Selon d'autres caractéristiques de ce procédé, l'ébauche installée verticalement dans une installation du même type qu'une installation de fibrage peut être chauffée à sa partie inférieure à une température inférieure à la température de fibrage du matériau utilisé, de manière à éviter une déformation lors de l'étirage ; en outre, le matériau vitreux utilisé peut être choisi parmi le verre de silice pure, ou tout autre verre multicomposant à base de silice comme les verres crown, flint, borosilicate ou sodosilicate. Lorsque le matériau vitreux choisi est la silice pure, la température de chauffage est de 2000°C plus ou moins 50°C.

Selon une autre caractéristique, on peut régler la vitesse d'étirage entre 1 et 20m/minute.

Avantageusement, on peut introduire un gaz à l'intérieur des alésages de l'ébauche de manière à réaliser à l'intérieur des canaux de ladite pièce en formation une surpression entre 270 et 2700 Pa par rapport à la pression ambiante. Le gaz introduit peut être de l'air ou de l'azote.

Dans une autre variante du procédé, le contrôle des dimensions extérieures de ladite pièce en formation peut être effectué par mesure d'une des dimensions de la section extérieure de ladite pièce.

Selon un perfectionnemnt important du procédé selon l'invention, l'ébauche initiale peut être fabriquée de la manière suivante :
- on usine au moins deux pièces appelées pré-ébauches, comportant chacune au moins une face plane, et telles que l'assemblage d'une face plane de chacune desdites pré-ébauches contre une face plane d'une autre desdites pré-ébauches forme une pièce de surface extérieure semblable à celle de ladite ébauche,
- on usine au moins une rainure dans au moins l'une desdites faces planes, et sur toute la longueur desdites faces,
- on assemble lesdites pré-ébauches de manière à former ladite pré-ébauche et lesdits alésages.

Les ébauches ainsi obtenues ont des longueurs plus grandes que celles obtenues en usinant par forage par exemple des canaux cylindriques dans un bloc de matériau vitreux. En effet, la longueur des ébauches ainsi obtenues est limitée à environ 250 mm, car la longueur du foret effectuant le perçage est limitée du fait de son faible diamètre (environ 3,2 mm, correspondant au diamètre initial souhaité des alésages). Cette limitation de longueur empêche la fabrication de grandes quantités de multiferrules à partir d'une seule ébauche.

De plus, leurs alésages sont plus précis et plus faciles à réaliser qu'avec la méthode de forage, car on sait bien qu'il est en général difficile de maintenir la forme cylindrique des alésages ainsi effectués, de sorte que ces derniers présentent très souvent une légère conicité. Cette légère conicité peut en pratique être à l''origine d'augmentations de l'atténuation des signaux optiques transmis à travers les multiferrules ; en outre, pour percer plusieurs alésages dans une ébauche, on utilise un seul foret, et l'on fait tourner la pièce à forer dans un sens opposé à celui de la rotation du foret, de manière à ce que le foret, très mince, ne dévie pas hors de la trajectoire à laquelle il est assigné, ce qui oblige à déplacer l'ébauche lors de chaque perçage, afin d'effectuer l'alésage selon l'axe de rotation du foret. Il faut donc prévoir un montage spécifique et complexe. De telles dispositions, même si elles améliorent la qualité des alésages, conduisent encore à un mauvais parallélisme entre leurs axes.

Avantageusement, après l'usinage de la ou des rainures, les faces planes usinées sont abrasées de manière à rendre uniforme sur toute leur longueur la profondeur de la ou des rainures. Cette abrasion permet de rectifier les rainures lorsque celles-ci ont une profondeur trop grande, ou bien lorsque leur profondeur varie d'une extrémité à l'autre des pré-ébauches.

Pour maintenir les pré-ébauches assemblées entre elles afin de les installer dans un dispositif d'étirage, une pièce en un matériau vitreux semblable à celui des pré-ébauches et formant collier enserre les pré-ébauches à chacune des extrémités de l'ébauche ainsi reconstituée.

Les rainures usinées ont une section transversale en forme de demi-cercle.

Selon un mode de réalisation possible, chacune des faces planes destinée à être assemblée contre une autre face plane comporte au moins une rainure. Dans ce cas, les pré-ébauches sont par exemple assemblées de sorte que la ou les rainures de l'une des faces coïncident avec celles usinées dans la face venant s'assembler contre elle de manière à constituer le ou les alésages de l'ébauche.

Selon un autre mode de réalisation, les pré-ébauches sont assemblées de sorte que la ou les rainures de l'une des faces coïncident avec une partie plane non usinée de la face venant s'assembler contre elle.

L'ébauche fabriquée peut-être cylindrique et fabriquée à pertir de deux pré-ébauches identiques de section transversale en forme de demi-cercle. L'ébauche peut également être parallélépipédique et être fabriquée à partir de deux pré-ébauches parallélépipédiques.

En outre, il est possible que l'ébauche utilisée comporte sur toute sa longueur, des gorges de guidage parallèles aux alésages.

On peut ainsi réaliser selon le procédé objet de l'invention ou l'une ou plusieurs de ses variantes, des multiferrules comportant des gorges de guidage correspondant à celles de l'ébauche et parallèles aux canaux.

Avantageusement, les canaux des multiferrules sont cylindriques et peuvent avoir, au moins sur l'une des faces extrêmes desdites multiferrules, une forme tronconique.

Les multiferrules ainsi obtenues peuvent étre utilisées par exemple pour la connexion d'un assemblage de fibres optiques à un autre ou pour la connexion d'un assemblage de fibres optiques à un module de guides d'ondes optiques, cette connexion pouvant être fixe ou démontable.

Selon une application possible d'une multiferrule obtenue comme précédemment, les fibres optiques de deux assemblages peuvent être introduites et fixées dans les canaux de ladite multiferrule par collage pour assurer une connexion fixe. Ce collage peut être un collage par une colle liquide polymérisable par exemple par un chauffage aux rayonnements ultraviolets. Ce collage sera appelé par la suite "collage UV"

Selon une autre application préférentielle, on peut introduire les fibres optiques d'un assemblage dans les canaux de ladite multiferrule, de manière à ce que lesdites fibres optiques affleurent sur la face opposée à l'extrémité d'entrée, ladite face pouvant être polie, pour assurer une connexion fixe ou démontable. La connexion fixe peut être réalisée gràce à un collage UV.

La connexion d'un ruban de fibres optiques à un module de guides d'ondes est facilitée grâce à l'utilisation d'une multiferrule selon l'invention, qui permet un collage UV et facilite le positionnement des fibres par rapport aux guides d'ondes, ce positionnement étant effectué fibre par fibre dans l'art antérieur.

Des caractéristiques et avantages de la présente invention ainsi que des applications de multiferrules obtenues selon l'invention apparaîtront au cours de la description suivante d'un procédé de fabrication et des applications des multiferrules qui en résultent, donnée à titre illustratif mais nullement limitatif.
- la figure 1 illustre le schéma de fonctionnement d'un procédé de fabrication possible selon l'invention,
- les figures 2 et 3 représentent des coupes respectivement selon les lignes II-II et III-III de la figure 1,
- la figure 4A représente en coupe transversale une pré-ébauche destinée à la réalisation d'une ébauche de multiferrule comprenant une rangée d'alésages cylindriques à axes parallèles,
- la figure 4B représente en coupe transversale l'ébauche de multiferrule obtenue à partir de deux pré-ébauches comme celle de la figure 4A,
- la figure 5 représente en coupe transversale trois pré-ébauches destinées à la réalisation d'une ébauche de mulitferrule comprenant deux rangées d'alésages cylindriques à axes parallèlles.
- les figures 6 à 10 illustrent des utilisations possibles des multiferrules obtenues par le procédé selon l'invention.

Dans les figures suivantes, les éléments communs portent les mêmes numéros de référence.

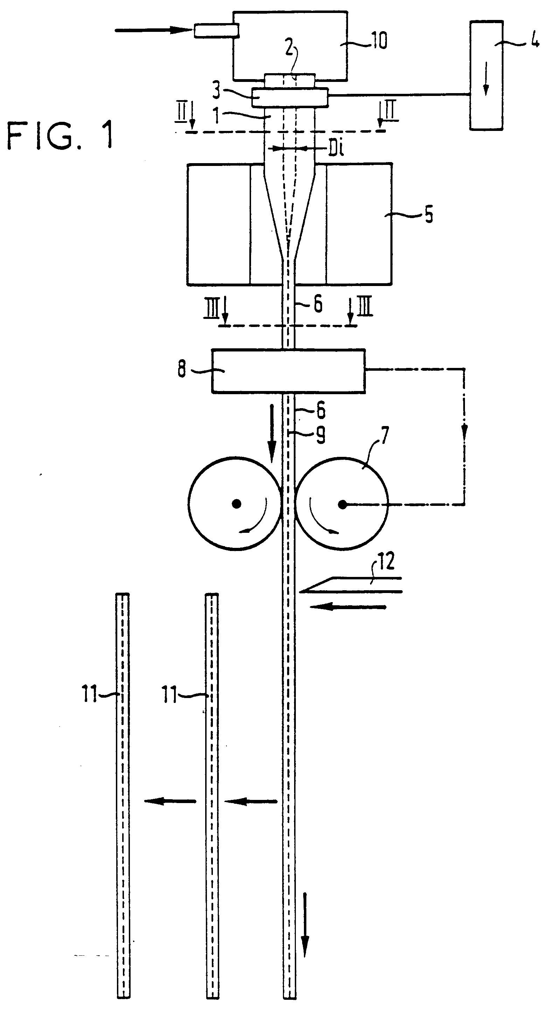

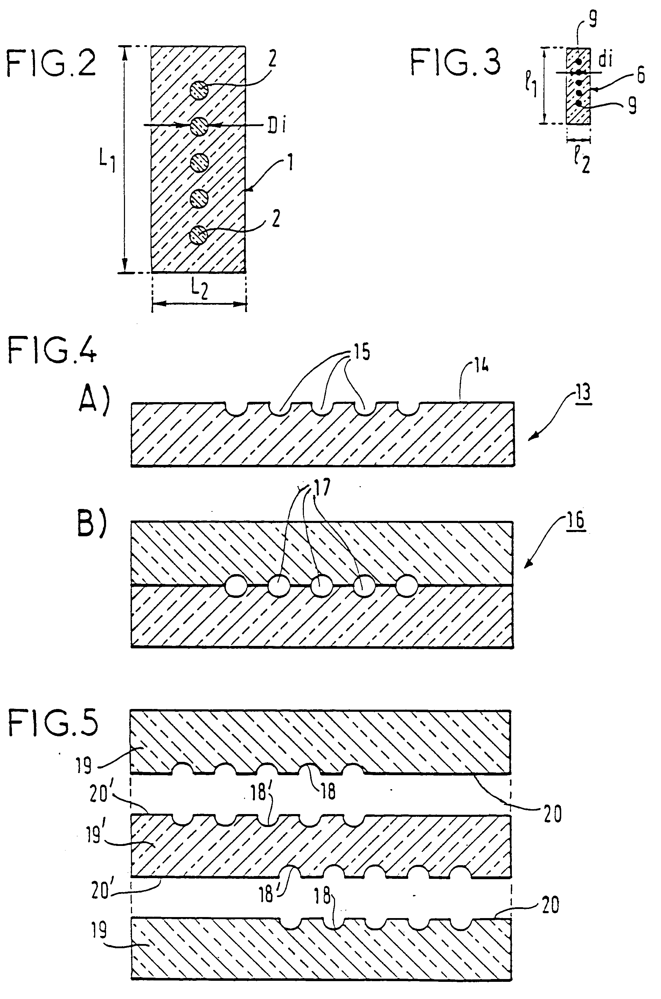

Dans la figure 1, une ébauche en verre 1 sous forme d'une plaque à section rectangulaire (longueur L1, largeur L2) dans laquelle a été usinée une série d'alésages cylindriques 2 (de diamètre Di) à axes parallèles (voir figure 2) est disposée verticalement et maintenue par un organe de maintien 3 associé à un mécanisme 4 permettant de faire descendre l'ébauche 1 au fur et à mesure de la fabrication.

L'ébauche 1 est introduite dans un four 5 où la température est réglée pour rester inférieure où la température de fibrage du matériau. Pour un verre de silice pure, la température utilisée dans le procédé selon l'invention sera de l'ordre de 2000°C plus ou moins 50°C.

La pièce 6 qui se forme par diminution des dimensions extérieures de l'ébauche est tirée par un dispositif mécanique 7, opérant en ligne droite, du type à rouleaux. La force de traction est asservie à une des dimensions (longueur l1 ou largeur l2) de la section extérieure actuelle de la pièce en formation 6 (voir figure 3), qui est mesurée périodiquement ou en permanence par un organe de mesure 8. Il suffit en effet de mesurer une des dimensions caractéristiques de la section extérieure actuelle de la pièce en formation 6 (longueur l1 ou largeur l2), car le rapport d'homothétie (L2/l2 ou L1/l1 ici) est le même pour toutes les dimensions caractéristiques (intérieures bu extérieures) de la pièce en formation ainsi que pour les tolérances associées à ces dimensions ; il faut toutefois que le guidage de cette dernière n'entraîne pas de mouvements de vrille, ce qui est le cas lorsque l'on utilise des rouleaux 7 avec une vitesse de tirage adéquate, pouvant aller jusqu'à 20m/minute.

Il est possible d'introduire, à l'intérieur des canaux 9 de la pièce 6 en formation, une faible suppression au moyen d'un gaz injecté dans un collecteur 10 surmontant l'ébauche. La surpression sera typiquement comprise entre 270 et 2700 Pa, et facilement régulée selon le taux de fuite apporté par les orifices des canaux 9.

Le choix du gaz n'est pas critique ; il suffit de choisir un gaz neutre vis-à-vis du verre, et ce peut être par exemple de l'air ou de l'azote.

On peut toutefois s'affranchir de cette surpression en étirant à des températures suffisamment basses, pour lesquelles le rétreint et la déformation après refroidissement sont moins importants et n'affectent pas, notamment, le diamètre intérieur di et le parallélisme des canaux 9.

En partant d'une ébauche 1 ayant les dimensions suivantes :
- diamètre intérieur Di des alésages cylindriques 2 : 3,175mm avec une tolérance nulle en moins et une tolérance de 0,1mm en plus,
- longueur L1 de la section extérieure : 62,5mm plus ou moins 0,5mm,
- largeur L2 de la section extérieure : 19mm plus ou moins 0,5mm,
- écartement entre les alésages 2 : 6,25mm,
- hauteur : 250mm,
on obtient une pièce 6 ayant les dimensions suivantes :
- diamètre intérieur di des canaux 9 : 0,127mm avec une tolérance nulle en moins et une tolérance de 0,004mm en plus,
- longueur l1 de la section extérieure : 2,5mm plus ou moins 0,02mm,
- largeur l2 de la section extérieure : 0,76mm plus ou moins 0,02mm,
- écartement entre les canaux 9 : 0,25mm,
- hauteur : 150m.

Avec une plus grande précision dans l'usinage de l'ébauche 1, en partant d'une ébauche 1 ayant les dimensions suivantes :
- diamètre intérieur Di des alésages cylindriques 2 : 3,175mm avec une tolérance nulle en moins et une tolérance de 0,025mm en plus,
- longueur L1 de la section extérieure : 62,5mm plus ou moins 0,012mm,
- largeur L2 de la section extérieure : 19mm plus ou moins 0,012mm,
- écartement entre les alésages 2 : 6,25mm,
- hauteur : 250mm,
on obtient une pièce 6 ayant les dimensions suivantes :
- diamètre intérieur di des canaux 9 : 0,127mm avec une tolérance nulle en moins et une tolérance de 0,001mm en plus,
- longueur l1 de la section extérieure : 2,5mm plus ou moins 0,0005mm,
- largeur l2 de la section extérieure : 0,76mm plus ou moins 0,0005mm,
- écartement entre les canaux 9 : 0,25mm,
- hauteur : 150m.

Lorsque le rapport de réduction, L2/l2 par exemple, est de 25, comme dans les deux exemples cités ci-dessus, on peut obtenir, à partir d'une ébauche 1 de hauteur 250mm, une pièce 6 de hauteur 250x25x25 = 156250mm, soit environ 150m. Ceci permet de confectionner 15000 multiferrules 11 de 10mm de hauteur ou 7500 multiferrules 11 de 20mm de hauteur, par exemple.

Ainsi, le procédé de l'invention associe à la précision requise pour les applications de la connectique optique, une économie importante du coût de fabrication des multiferrules.

Les ébauches 1 de multiferrules selon l'invention peuvent être réalisés par exemple par forage de canaux cylindriques dans un bloc de matériau vitreux. Toutefois, il est préférable, pour obtenir des multiferrules de meilleure qualité, de réaliser les ébauches d'une autre manière, toujours en partant d'un bloc de matériau vitreux dans lequel les alésages sont obtenus par enlèvement de matière.

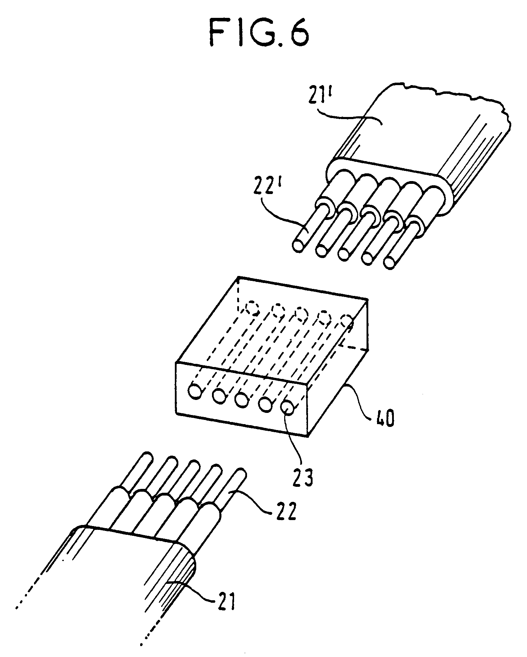

On va décrire plus en détail, en relation avec les figures 4A, 4B et 5, une méthode de fabrication des ébauches 1.

On a représenté en figure 4A une pré-ébauche parallélépipédique 13 en un matériau vitreux.

En figure 4B, les deux pré-ébauches représentées, semblables à celle de la figure 4A possèdent chacune une face plane 14, ces faces planes venant au contact l'une de l'autre pour former l'ébauche recherchée.

Sur ces faces 14 rendues planes au centième de millimètre près par polissages successifs au moyen de disques dont la surface est recouverte d'un abrasif granuleux (comme le carbure de tungstène, la pâte diamantée ou l'alumine par exemple) de plus en plus fin au fur et à mesure du polissage, ou par toute autre méthode bien connue de l'homme de métier, sont pratiquées, à l'aide d'un outil diamanté, des gorges ou rainures parallèles 15 de section en forme de demi-cercle sur toute la longueur des deux demi-ébauches. La profondeur maximale de ces rainures est égale au rayon des alésages cylindriques que l'on souhaite obtenir dans l'ébauche finale. Ces rainures ont par exemple chacune une profondeur de 1,587 mm avec une tolérance de 0,002 mm en plus, ce qui permet d'obtenir des alésages de 3,175 mm de diamètre avec une tolérance de 0,004 mm en plus. Une fois ces rainures réalisées, les deux faces planes respectives des deux demi-ébauches sont assemblées pour reconstituer l'ébauche recherchée, référencée 16 en figure 4B. Cette ébauche 16 comporte alors des alésages équidistants 17 d'axes parallèles.

Le parallélisme entre les axes des alésages 17 est bien meilleur que dans les ébauches réalisées par forage. Pour une ébauche de 350 mm de longueur réalisée selon l'invention, on observe entre les deux extrémités des alésages un écart de quelques dizaines de microns de l'axe par rapport à la position théorique souhaitée ; pour les ébauches de même longueur, obtenues par forage, l'écart observé est de quelques centaines de microns.

Par ailleurs, puisqu'on n'utilise plus de foret de longueur limitée du fait de sa minceur, la longueur des rainures, et par conséquent celle des ébauches, ne dépend que de la capacité de la machine d'usinage, qui est bien supérieure à la longueur limite atteinte auparavant (environ 250 mm). La longueur des ébauches ainsi fabriquées peut en pratique atteindre environ 350 mm.

De plus, la réalisation des rainures dans les demi-ébauches ne nécessite pas l'utilisation d'un dispositif complexe et onéreux. En effet, étant donné qu'il n'est pas nécessaire d'introduire un foret dans une ébauche de verre, ce qui implique la rotation de l'ébauche sur elle-même, la demi-ébauche peut être fixée sur un support, et l'outil destiné à pratiquer les rainures est déplacé par exemple par un moteur pas à pas afin d'effectuer les rainures les unes à côté des autres et avec leurs axes parallèles.

Par ailleurs, on n'observe pas de conicité des alésages.

Avantageusement, en outre, on peut effectuer une rectification dans le cas où, par exemple, les rainures usinées sont trop profondes ou de profondeur variable d'une extrémité à l'autre de la demi-ébauche. Pour retrouver les dimensions cherchées, il suffit d'abraser la face comportant des rainures défectueuses de manière à diminuer la profondeur jusqu'à obtention de la dimension désirée.

On peut ainsi réaliser des ébauches de multiferrules comportant autant d'alésages que nécessaire pour leur application. Il est également possible d'effectuer des rainures 18 sur deux pré-ébauches 19 en un matériau vitreux et sur leurs faces 20 destinées à venir en regard d'une face 20' d'une pré-ébauche 19' comportant également des rainures 18' (voir figure 5). En assemblant alors les trois pré-ébauches selon les lignes en traits interrompus de la figure 5 de manière à faire coïncider leurs rainures 18 et 18' pour former des alésages cylindriques, on obtient une ébauche comportant plusieurs rangées d'alésages parallèles permettant de raccorder autant de fibres qu'on le souhaite.

Pour utiliser les ébauches selon l'invention dans une installation de fibrage comme celle représentée en figure 1, on maintient les pré-ébauches aux deux extrémités (celle orientée vers le haut de l'installation de fibrage et l'extrémité opposée) de l'ébauche ainsi reconstituée, de sorte que la pièce de verre utilisée forme un collier de maintien des pré-ébauches rassemblées.

Bien entendu, l'invention n'est pas limitée au mode de réalisation et aux exemples qui viennent d'être décrits.

En particulier, la section des multiferrules à réaliser peut être quelconque (circulaire, polygonale,...), mais de dimensions extérieures bien définies. Cependant, les structures parallélépipédiques sont plus pratiques à utiliser pour les empilages de multiferrules.

Par ailleurs, on indique comme matériau vitreux préférentiel à utiliser dans le procédé de l'invention la silice pure, mais tout autre verre multicomposant à base de silice, comme par exemple les verres crown, flint, borosilicate ou sodosilicate, peut être employé.

Enfin, un perfectionnement important prévoit un usinage tronconique des canaux cylindriques des multiferrules au moins à l'une des extrémités de la multiferrule, cet usinage permettant d'introduire plus facilement les fibres optiques dans la multiferrule.

On va à présent s'attacher à décrire quelques exemples d'application des multiferrules précédentes.

Dans la figure 6, une multiferrule 40 sert de pièce de connexion entre les rubans multifibres 21 et 21'. La liaison est effectuée au moyen d'une épissure : les fibres optiques 22 et 22' des rubans 21 et 21' sont engagées dans les canaux 23 de la multiferrule 20 et la connexion est assurée grâce à une colle liquide préalablement introduite dans les canaux 23 et que l'on polymérise par chauffage (pistolet à UV ou autre) une fois les fibres optiques placées correctement. Toutefois, le chauffage classique présente l'inconvénient de modifier les réglages préalables d'alignement des fibres optiques. Il est donc préférable d'utiliser un collage UV. Or les multiferrules en céramique de l'art antérieur sont imperméables aux rayons UV. Un avantage supplémentaire des multiferrules selon l'invention en un matériau vitreux perméable aux UV, est de permettre un collage UV, plus précis et plus facile à réaliser qu'un collage par chauffage classique. La connexion obtenue est alors fixe.

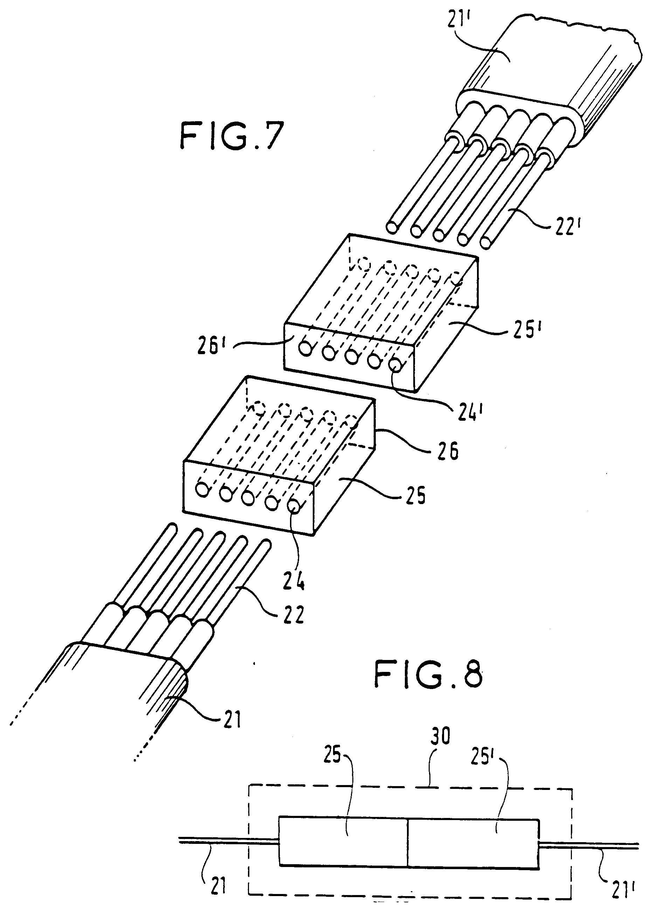

Dans la figure 7, les rubans multifibres 21 et 21' sont respectivement engagés dans les canaux 24 et 24' des multiferrules 25 et 25', de manière à ce que les fibres optiques 22 et 22' qui les composent affleurent aux faces extrêmes 26 et 26' des multiferrules 25 et 25'. Les fibres optiques 22 et 22' sont immobilisées par exemple par collage comme précédemment. Après polissage des faces extrêmes 26 et 26', ces dernières sont collées l'une à l'autre de telle sorte que les fibres 22 et 22' soient les unes en face des autres respectivement. Cette connexion est fixe.

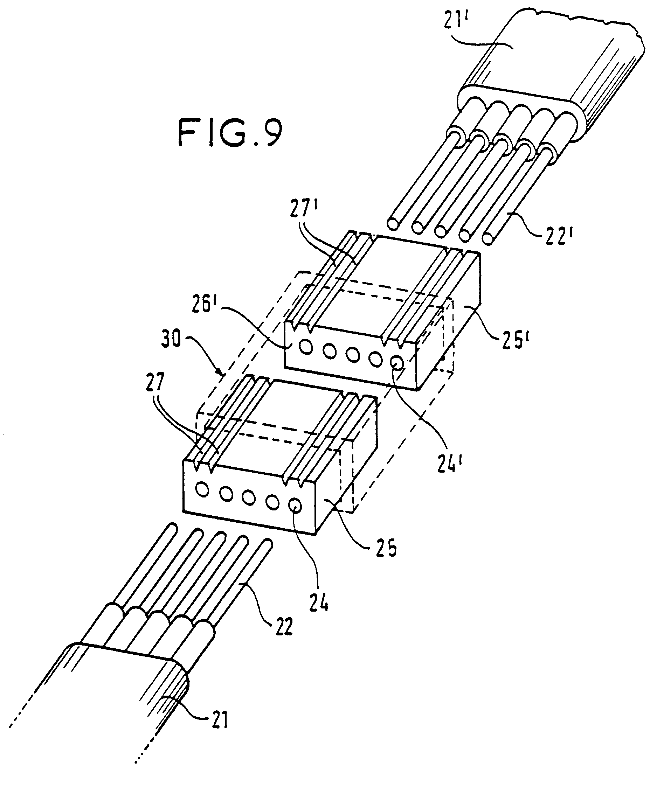

Dans les figures 8 et 9 on retrouve les mêmes éléments que dans la figure 7, référencés avec les mêmes numéros. Ici, la connexion est assurée par l'emploi d'un élément de fixation démontable 30. Pour faciliter la mise en place de cet élément sur les deux multiferrules 25 et 25', il est possible de fabriquer des multiferrules à gorges longitudinales 27 et 27' (parallèles aux canaux) en U ou en V, ces rainures servant de guidage pour la mise en place de l'élément de fixation 30. Ces gorges peuvent correspondre à des gorges usinées au préalable sur l'ébauche correspondante servant à la fabrication des multiferrules. La connexion ainsi obtenue est démontable.

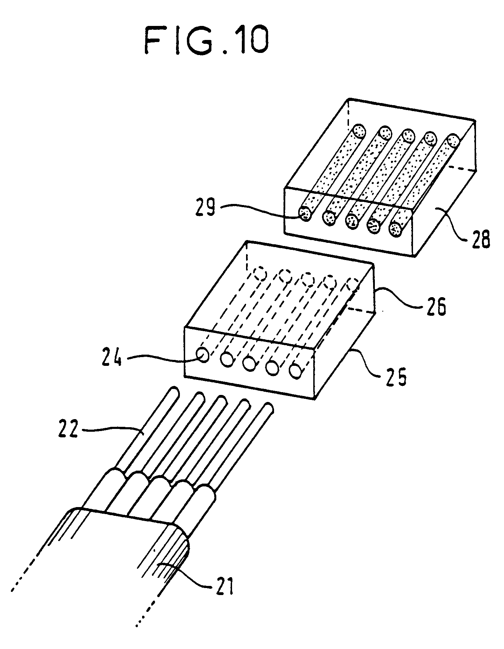

Dans la figure 10, il s'agit d'assurer la connexion entre un ruban multifibres 21 et un module 28 de guides d'ondes optiques 29 grâce à une multiferrule 25. Pour ce faire, on procède selon le procédé décrit pour l'application de la figure 7 jusqu'à la phase de polissage de la face 26.

Pour connecter le module 28 à la multiferrule 25, on peut effectuer soit un collage direct soit une fixation démontable par l'intermédiaire d'un élément de fixation 30 analogue à celui des figures 8 et 9.

Bien entendu, l'invention n'est pas limitée au mode de réalisation qui vient d'être décrit, et l'on pourra en particulier remplacer tout moyen par un moyen équivalent.

## Revendications

1. Procédé de fabrication de multiferrules (11) en un matériau vitreux comportant une pluralité de canaux cylindriques (9) à axes parallèles, comprenant les opérations suivantes :
- on réalise dans un matériau vitreux une ébauche (1) de section bien définie, comprenant des alésages cylindriques (2) à axes parallèles ayant un diamètre intérieur Di, les dimensions de la section extérieure de ladite ébauche (1) et le diamètre Di étant définis avec des précisions relatives au moins égales aux précisions relatives demandées respectivement pour les dimensions de la section extérieure de la multiferrule (11) à réaliser et le diamètre intérieur di desdits canaux (9) de ladite multiferrule, ladite ébauche étant destinée à être chauffée et simultanément étirée jusqu'à obtention des dimensions extérieures requises,
- on dispose ladite ébauche (1) verticalement dans une installation du même type qu'une installation de fibrage pour fibres optiques,
- on exerce un échauffement et une traction sur la pièce en formation à la partie inférieure de ladite ébauche (1), pour obtenir une pièce intermédiaire (6) ayant les dimensions extérieures requises,
- on réalise une multiferrule (11) de longueur choisie en sectionnant une longueur donnée de la pièce intermédiaire (6) obtenue comme indiqué ci-dessus.

2. Procédé selon la revendication 1, caractérisé en ce que l'ébauche (1) installée verticalement dans l'installation de fibrage est chauffée à sa partie inférieure à une température inférieure à la température de fibrage du matériau vitreux utilisé.

3. Procédé selon l'une des revendications 1 et 2, caractérisé en ce que le matériau vitreux utilisé est choisi parmi le verre de silice pure, ou tout autre verre multicomposant à base de silice comme les verres crown, flint, borosilicate ou sodosilicate.

4. Procédé selon l'une des revendications 1 à 3, caractérisé en ce que le matériau vitreux choisi est la silice pure et que pour ce matériau, la température de chauffage est de 2000°C plus ou moins 50°C.

5. Procédé selon l'une des revendications 1 à 4, caractérisé en ce que l'on règle la vitesse d'étirage entre 1 et 20 m/min.

6. Procédé selon l'une des revendications 1 à 5, caractérisé en ce que l'on introduit, à l'intérieur des alésages (2) de l'ébauche (1), un gaz de manière à réaliser à l'intérieur des canaux de ladite pièce en formation une surpression entre 270 et 2700 Pa par rapport à la pression ambiante.

7. Procédé selon la revendication 6, caractérisé en ce que le gaz introduit est de l'air ou de l'azote.

8. Procédé selon l'une des revendications 1 à 7, caractérisé en ce que l'on contrôle les dimensions extérieures de ladite pièce intermédiaire (6) en formation en mesurant une des dimensions de la section extérieure de ladite pièce (6).

9. Procédé selon l'une des revendications 1 à 8 caractérisé en ce que ladite ébauche (1) est réalisée de la manière suivante :
- on usine au moins deux pièces (13 ; 19, 19') en un matériau vitreux appelées pré-ébauches, comportant chacune au moins une face plane (14 ; 20, 20'), et telles que l'assemblage d'une face plane (14 ; 20, 20') de chacune desdites pré-ébauches (13 ; 19, 19') contre une face plane d'une autre desdites pré-ébauches forme une pièce (16) de surface extérieure semblable à celle de ladite ébauche (1),
- on usine au moins une rainure (15 ; 18, 18') dans au moins l'une desdites faces planes (14 ; 20, 20') destinée à être assemblée contre une autre desdites faces planes, et sur toute la longueur desdites faces,
- on assemble lesdites pré-ébauches (13 ; 19, 19') de manière à former ladite ébauche et lesdits alésages.

10. Procédé selon la revendication 9, caractérisé en ce que, après l'usinage de la ou desdites rainures (15 ; 18, 18'), lesdites faces planes (14 ; 20, 20') usinées sont abrasées de manière à rendre uniforme sur toute leur longueur la profondeur de la ou desdites rainures.

11. Procédé selon l'une des revendications 9 ou 10, caractérisé en ce que, une fois lesdites pré-ébauches (13 ; 19, 19') assemblées, une pièce en un matériau vitreux semblable à celui desdites pré-ébauches et formant collier enserre lesdites pré-ébauches à chacune des extrémités desdits alésages.

12. Procédé selon l'une des revendications 9 à 11, caractérisé en ce que lesdites rainures (15 ; 18, 18') ont une section transversale en forme de demi-cercle.

13. Procédé selon l'une des revendications 9 à 12, caractérisé en ce que chacune desdites faces planes (14 ; 20, 20') destinée à être assemblée contre une autre desdites faces planes comporte au moins une rainure (15 ; 18, 18').

14. Procédé selon la revendication 13, caractérisé en ce que lesdites pré-ébauches (13 ; 19, 19') sont assemblées de sorte que la ou lesdites rainures (15 ; 18, 18') de l'une desdites faces (14 ; 20, 20') coïncident avec celles usinées dans la face plane venant s'assembler contre elle de manière à constituer le ou lesdits alésages de ladite ébauche.

15. Procédé selon l'une des revendications 9 à 14, caractérisé en ce que lesdites pré-ébauches sont assemblées de sorte que la ou lesdites rainures de l'une desdites faces coïncident avec une partie plane non usinée de la face venant s'assembler contre elle.

16. Procédé selon l'une des revendication 9 à 15, caractérisée en ce que ladite ébauche est cylindrique, et en ce qu'elle est fabriquée à partir de deux pré-ébauches identiques de section transversale en forme de demi-cercle.

17. Procédé selon l'une des revendications 9 à 15, caractérisé en ce que ladite ébauche est parallélépipédique et en ce qu'elle est fabriquée à partir de deux pré-ébauches (13) parallélépipédiques.

18. Procédé selon l'une des revendications 1 à 17, caractérisé en ce que ladite ébauche comporte sur sa surface extérieure et sur toute sa longueur des gorges de guidage parallèles aux alésages.

19. Multiferrule caractérisée en ce qu'elle est réalisée selon l'une des revendications 1 à 18.

20. Multiferrule caractérisé en ce qu'elle est réalisée selon la revendication 18 et en ce qu'elle comporte des gorges de guidage (27, 27') correspondant à celles de l'ébauche et parallèles aux canaux (24, 24').

21. Multiferrule selon l'une des revendications 19 et 20, caractérisée en ce qu'au moins sur l'une des faces extrêmes de ladite multiferrule, lesdits canaux cylindriques ont une forme tronconique.

22. Application de la multiferrule selon l'une des revendications 19 à 21, caractérisée en ce que les fibres optiques de deux assemblages sont introduites et fixées dans les canaux de ladite multiferrule par collage pour assurer une connexion fixe.

23. Application de la multiferrule selon l'une des revendications 19 à 21, caractérisée en ce que les fibres optiques d'un assemblage sont introduites dans les canaux de ladite multiferrule, de manière à ce que lesdites fibres optiques affleurent sur la face opposée à l'extrémité d'entrée et que ladite face soit polie, pour assurer une connexion fixe ou démontable.

24. Application selon la revendication 23, caractérisée en ce que ladite connexion fixe est assurée grâce à un collage par UV.

25. Application selon l'une des revendications 23 et 24, caractérisée en ce qu'elle est utilisée pour la connexion entre un assemblage de fibres optiques et un module de guides d'ondes.

## Claims

1. A method of making multi-ferrules (11) from a vitreous material, the multi-ferrules having a series of cylindrical channels (9) with parallel axes, the method comprising the following steps:
forming a blank (1) of well-defined section from a vitreous material, with cylindrical passages (2) having parallel axes and an inside diameter Di, the dimensions of the outside section of the blank (1) and the diameter Di being defined with relative accuracies at least equal to the accuracies required respectively for the dimensions of the outside section of the multi-ferrule (11) to be made and for the inside diameter Di of said channels (9) of said multi-ferrule, said multi-ferrule being adapted to be heated and simultaneously drawn until the required outside dimensions are obtained,
positioning said blank (1) vertically in an apparatus of the same type as a fiber drawing apparatus for optical fibers,
applying heat and traction on the piece being formed at the bottom end of said blank (1), in order to obtain an intermediate piece (6) having the required outside dimensions, and
forming a multi-ferrule (11) of selected length by cutting a given length from the intermediate piece (6) obtained as indicated above.

2. A method according to claim 1, characterized in that the blank (1) positioned vertically in the fiber-drawing apparatus is heated at its bottom end to a temperature less than the fiber-formation temperature of the vitreous material.

3. A method according to claim 1 or 2, characterized in that the vitreous material is selected from pure silica glass or any other multi-component glass based on silica, such as crown, flint, borosilicate or soda-silicate glass.

4. A method according to any of claims 1 to 3, characterized in that the selected vitreous material is pure silica and that, for this material, the heating temperature is 2000°C ± 50°C.

5. A method according to any of claims 1 to 4, characterized in that the speed of drawing is adjusted in the range 1 m/min to 20 m/min.

6. A method according to any of claims 1 to 5, characterized in that a gas is introduced into the passages (2) of the blank (1) in such a manner as to establish a pressure in the range 270 Pa to 2700 Pa relative to the ambient pressure within the channels of said piece being formed.

7. A method according to claim 6, characterized in that the introduced gas is air or nitrogen.

8. A method according to any of claims 1 to 7, characterized in that the outside dimensions of said intermediate piece (6) being formed are controlled by measuring one of the dimensions of the outside section of said piece (6).

9. A method according to any of claims 1 to 8, characterized in that said blank (1) is formed in the following manner:
at least two pieces (13; 19, 19') of a vitreous material, called "pre-blanks", are machined, each having at least one flat face (14; 20, 20') and such that assembling a flat face (14; 20, 20') of any of said pre-blanks (13; 19, 19') against a flat face of another of said pre-blanks forms a piece (16) with an outside surface like that of said blank (1),
at least one groove (15; 18, 18') is machined in at least one of said flat faces (14; 20, 20') adapted to be assembled against another of said flat faces, said groove(s) extending over the whole length of said faces, and
said pre-blanks (13; 19, 19') are assembled in such a manner as to form said blank and said passages.

10. A method according to claim 9, characterized in that, after machining said groove or grooves (15; 18, 18'), said machined flat faces (14; 20, 20') are so ground as to render the depth of said groove or grooves uniform over the whole length thereof.

11. A method according to claim 9 or 10, characterized in that, once said pre-blanks (13; 19, 19') are assembled, collars made of a vitreous material similar to that of said pre-blanks are fitted around said pre-blanks at the ends of said passages.

12. A method according to any of claims 9 to 11, characterized in that said grooves (15; 18, 18') are of a semicircular cross-section.

13. A method according to any of claims 9 to 12, characterized in that each of said flat faces (14; 20, 20') adapted to be assembled against another of said flat faces has at least one groove (15; 18, 18').

14. A method according to claim 13, characterized in that said pre-blanks (13; 19, 19') are so assembled that said groove or grooves (15; 18, 18') of one of said faces (14; 20, 20') coincides with those machined in the flat face assembled thereagainst in such a manner as to form said passage or passages of said blank.

15. A method according to any of claims 9 to 14, characterized in that said pre-blanks are so assembled that said groove or grooves of one of said faces coincides or coincide with a non-machined flat part of the face assembled thereagainst.

16. A method according to any of claims 9 to 15, characterized in that said blank is cylindrical and in that it is made from two identical pre-blanks of semicircular cross-section.

17. A method according to any of claims 9 to 15, characterized in that said blank is in the form of a rectangular block and in that it is made from two rectangular pre-blanks (13).

18. A method according to any of claims 1 to 17, characterized in that said blank has guide channels on its outside surface parallel to the passages and extending over its whole length.

19. A multi-ferrule characterized in that it is made according to any of claims 1 to 18.

20. A multi-ferrule characterized in that it is made according to claim 18 and in that it comprises guide channels (27, 27') corresponding to those of the blank and parallel to the channels (24, 24').

21. A multi-ferrule according to claim 19 or 20, characterized in that said cylindrical channels have a flared form at at least one of the end faces of said multi-ferrule.

22. Use of the multi-ferrule according to any of claims 19 to 21, characterized in that the optical fibers of two assemblies are introduced into and bonded in the channels of said multi-ferrule to ensure a permanent connection.

23. Use of the multi-ferrule according to any of claims 19 to 21, characterized in that the optical fibers of an assembly are introduced into the channels of said multi-ferrule, in such a manner that said optical fibers are flush with the surface opposite the entrance end and in that said face is polished, to ensure a permanent or releasable connection.

24. Use according to claim 23, characterized in that said permanent connection is made by UV bonding.

25. Use according to claim 23 or 24, characterized in that it is used to connect an assembly of optical fibers and a waveguide module.

## Patentansprüche

1. Verfahren zur Herstellung von Vielfachanschluß-Armaturen (11) aus einem glasartigen Material mit zahlreichen zylindrischen und parallelen Kanälen (9), wobei das Verfahren die folgenden Schritte aufweist:
- man stellt aus einem glasartigen Material einen Rohling (1) mit definiertem Querschnitt her, der zylindrische Bohrungen (2) mit parallelen Achsen und einem Innendurchmesser Di besitzt, wobei die Abmessungen des Außenquerschnitts des Rohlings (1) und der Durchmesser Di mit einer Genauigkeit definiert sind, die zumindest den gewünschten Genauigkeitswerten für die Abmessungen des äußeren Querschnitts der herzustellenden Armatur (11) und des Innendurchmessers (di) der Kanäle (9) der Armatur gleicht, wobei der Rohling erwärmt und gleichzeitig gezogen werden soll, bis die gewünschten Außenabmessungen erreicht sind,
- man setzt den Rohling (1) senkrecht in eine Einrichtung gleicher Art, wie sie für das Ziehen von Lichtleitfasern verwendet wird,
- man erwärmt und zieht das sich bildende Bauteil am unteren Ende des Rohlings (1), um ein Zwischenprodukt-Bauteil (6) mit den gewünschten Außenabmessungen zu erhalten,
- man erzeugt eine Vielfachanschluß-Armatur (11) der gewünschten Länge, indem eine gegebene Länge von dem durch obige Verfahrensschritte erhaltenen Zwischenprodukt-Bauteil (6) abgeschnitten wird.

2. Verfahren nach Anspruch 1, dadurch gekennzeichnet, daß der senkrecht in der Zieheinrichtung eingebaute Rohling (1) in seinem unteren Bereich auf eine Temperatur erwärmt wird, die unter der Ziehtemperatur des verwendeten glasartigen Materials liegt.

3. Verfahren nach einem der Ansprüche 1 und 2, dadurch gekennzeichnet, daß das verwendete glasartige Material reines Siliziumoxid oder ein anderes Glas mit mehreren Bestandteilen auf der Basis von Siliziumoxid ist, wie z.B. Kronglas, Flintglas, Borsilikatglas oder Natriumsilikatglas.

4. Verfahren nach einem der Ansprüche 1 bis 3, dadurch gekennzeichnet, daß glasartige Material reines Siliziumoxid ist und daß für dieses Material die Erwärmungstemperatur 2000 ±50°C beträgt.

5. Verfahren nach einem der Ansprüche 1 bis 4, dadurch gekennzeichnet, daß die Ziehgeschwindigkeit zwischen 1 und 20 m/min eingestellt wird.

6. Verfahren nach einem der Ansprüche 1 bis 5, dadurch gekennzeichnet, daß man in die Bohrungen (2) des Rohlings (1) ein Gas einspeist, so daß im Inneren der Kanäle des sich bildenden Bauteils ein Überdruck zwischen 270 und 2700 Pa bezüglich Atmosphärendruck herrscht.

7. Verfahren nach Anspruch 6, dadurch gekennzeichnet, daß das eingespeiste Gas Luft oder Stickstoff ist.

8. Verfahren nach einem der Ansprüche 1 bis 7, dadurch gekennzeichnet, daß die Außenabmessungen des sich bildenden Zwischenprodukt-Bauteils (6) durch Messen einer Abmessung des Außenquerschnitts des Bauteils (6) gemessen werden.

9. Verfahren nach einem der Ansprüche 1 bis 8, dadurch gekennzeichnet, daß der Rohling (1) folgendermaßen hergestellt wird:
- man schneidet mindestens zwei Vorrohlinge (13; 19, 19') aus einem glasartigen Material zurecht, die je mindestens eine ebene Seite (14; 20, 20') besitzen, derart, daß durch Auflegen einer ebenen Seite (14; 20, 20') jedes Vorrohlings (13; 19, 19') auf eine ebene Seite eines anderen Vorrohlings ein Bauteil (16) gebildet wird, dessen äußere Oberfläche der des Rohlings (1) ähnelt,
- man schneidet mindestens eine Rinne (15; 18, 18') in mindestens eine der ebenen Seiten (14; 20, 20'), die gegen eine andere der ebenen Seiten gelegt werden soll, über die ganze Länge dieser Seiten ein,
- man setzt die Vorrohlinge (13; 19, 19') so zusammen, daß sich der Rohling und die Bohrungen ergeben.

10. Verfahren nach Anspruch 9, dadurch gekennzeichnet, daß nach dem Einschneiden der Rinne oder der Rinnen (15; 18, 18') die bearbeiteten ebenen Seiten (14; 20, 20') abgeschliffen werden, so daß die Tiefe der Rinne oder Rinnen über die ganze Länge gleichmäßig wird.

11. Verfahren nach einem der Ansprüche 9 oder 10, dadurch gekennzeichnet, daß nach dem Zusammensetzen der Vorrohlinge (13; 19, 19') ein Bauteil aus einem glasartigen Material ähnlich dem der Vorrohlinge einen Kragen bildet, der die Vorrohlinge an jedem Ende der Bohrungen einspannt.

12. Verfahren nach einem der Ansprüche 9 bis 11, dadurch gekennzeichnet, daß die Rinnen (15; 18, 18') einen Querschnitt in Form eines Halbkreises besitzen.

13. Verfahren nach einem der Ansprüche 9 bis 12, dadurch gekennzeichnet, daß jede der ebenen Seiten (14; 20, 20'), die gegen eine andere ebene Seite gelegt werden soll, mindestens eine Rinne (15; 18, 18') besitzt.

14. Verfahren nach Anspruch 13, dadurch gekennzeichnet, daß die Vorrohlinge (13; 19, 19') so zusammengesetzt werden, daß die Rinne oder Rinnen (15; 18, 18') einer der Seiten (14; 20, 20') eines Vorrohlings mit denen zusammenfallen, die in die ebene Seite eines zweiten Vorrohlings eingeschnitten sind, die an sie angelegt werden, so daß sich die Bohrung oder die Bohrungen des Rohlings ergeben.

15. Verfahren nach einem der Ansprüche 9 bis 14, dadurch gekennzeichnet, daß die Vorrohlinge so zusammengesetzt werden, daß die Rinne oder Rinnen einer der Seiten mit einem nicht bearbeiteten ebenen Bereich der auf ihr liegenden Seite zusammenfallen.

16. Verfahren nach einem der Ansprüche 9 bis 15, dadurch gekennzeichnet, daß der Rohling zylindrisch ist und von zwei identischen Vorrohlingen mit halbkreisförmigem Querschnitt gebildet wird.

17. Verfahren nach einem der Ansprüche 9 bis 15, dadurch gekennzeichnet, daß der Rohling parallelepipedisch ist und ausgehend von zwei parallelepipedischen Vorrohlingen (13) gebildet wird.

18. Verfahren nach einem der Ansprüche 1 bis 17, dadurch gekennzeichnet, daß der Rohling auf seiner äußeren Oberfläche und über seine ganze Länge Führungsrillen parallel zu den Bohrungen besitzt.

19. Vielfachanschluß-Armatur, dadurch gekennzeichnet, daß sie nach einem der Ansprüche 1 bis 18 hergestellt ist.

20. Vielfachanschluß-Armatur, dadurch gekennzeichnet, daß sie nach Anspruch 18 hergestellt ist und Führungsrillen (27, 27') entsprechend denen des Rohlings besitzt, die parallel zu den Kanälen (24, 24') verlaufen.

21. Vielfachanschluß-Armatur nach einem der Ansprüche 19 und 20, dadurch gekennzeichnet, daß mindestens an einer der Stirnseiten der Armatur die zylindrischen Kanäle eine Kegelstumpfform besitzen.

22. Anwendung der Vielfachanschluß-Armatur nach einem der Ansprüche 19 bis 21, dadurch gekennzeichnet, daß die Lichtleitfasern zweier Fasergruppen in die Kanäle der Armatur hineingesteckt und dort durch Verkleben fixiert werden, um eine festen Anschluß zu gewährleisten.

23. Anwendung der Vielfachanschluß-Armatur nach einem der Ansprüche 19 bis 21, dadurch gekennzeichnet, daß die Lichtleitfasern einer Fasereinheit in die Kanäle der Armatur so hineingesteckt werden, daß die Lichtleitfasern an der der Eingangsseite entgegengesetzten Seite anstehen, und daß diese Seite poliert wird, um einen festen oder lösbaren Anschluß zu gewährleisten.

24. Anwendung nach Anspruch 23, dadurch gekennzeichnet, daß der feste Anschluß durch einen UV-Kleber hergestellt wird.

25. Anwendung nach einem der Ansprüche 23 und 24, dadurch gekennzeichnet, daß sie für den Anschluß zwischen einer Einheit von Lichtleitfasern und einem Modul von Lichtleitern verwendet wird.
